Europäisches Patentamt

European Patent Office

Office européen des brevets

(11) Publication number: **0 446 825 A1**

# EUROPEAN PATENT APPLICATION

(21) Application number: 91103663.0

(51) Int. Cl.5: **B29B 7/40**, B01F 15/00

(22) Date of filing: **11.03.91**

(30) Priority: **16.03.90 IT 1971190**

(43) Date of publication of application:
**18.09.91 Bulletin 91/38**

(84) Designated Contracting States:
**DE ES FR GB**

(71) Applicant: **GUSBI Officina Meccanica S.p.A.**
**Via Alessandria, 35**
**I-27029 Vigevano (Pavia)(IT)**

(72) Inventor: **Bianchi, Terenzio**
**Via Del Convento No. 20**
**I-27029 Vigevano, Pavia(IT)**

(74) Representative: **Petruzzelli, Antonio**
**Via E. De Amicis No. 25**
**I-20123 Milano(IT)**

(54) Mixing apparatus with compressed-air cleaning device.

(57) A mixing apparatus for reactant plastic materials, comprising a low-pressure mixing head (10) having a mixing chamber (12) for mixing metered quantities of reactive chemical components (A, B) supplied via separate feeding ducts (18, 20) to one end of the chamber (12) opposite to an outlet opening (13), and an impeller (14) in said chamber (12) connected to a drive motor (16). Pressurized air cleaning means (21, 22, 23) are provided for cleaning the chamber (12) and the rotor (14); said cleaning means comprises a booster (23) and air inlet (21) opening into the mixing chamber (12) for generating a super pressure air flow impinging the inner walls (11) and the impeller (14) of the mixing chamber (12), and to remove the mixture adhered to the impeller and the mixing head.

FIG.3

The present invention relates to an apparatus for mixing reactant plastic materials or chemical components, such as polyurethane and polyole materials, comprising a low-pressure mixing head of the type having a mixing chamber and an impeller connected to a drive motor for mixing reactive chemical components supplied via separate ducts to one end of the chamber which is opposite to an outlet or discharging nozzle for the mixture.

In mixing heads for apparatus of the kind mentioned above, provision must be made for periodic purging and cleaning of the chamber and the impeller at the end of each mixing operation, or after a number of mixing cycles, so as to prevent the chemical mixture, in particular a polyurethane mixture, from hardening and obstructing the outlet opening, or solidifying on the walls of the chamber and on the same impeller.

At present, US-A- 3 207 486, the cleaning of the mixing heads is carried out by means of a solvent, for example methyl-chloride, which dissolves and removes the residue of the mixture still adhering to the walls of the chamber and the impeller, after which the solvent is blow out from the mixing chamber by compressed air normally available at the network pressure, so as to dry the chamber and the impeller.

The tendency nowadays is to eliminate the use of solvents for cleaning mixing heads since they cause an high degree of pollution, and result dangerous for the operators.

It has been therefore attempted to use hot water instead of solvents, but the results have been of limited success since the water, even if soaps are added, is unable to remove entirely the residue of polyurethane mixture which still adheres to the walls of the chamber, forming incrustations.

On the other hand, it has been noted that a polyurethane mixture, at the end of the mixing phase and before polymerisation thereof take place, has a substantially oily consistency with a relatively low degree of surface adhesion. Therefore, in the attempt to solve this problem and to overcome technical prejudice directing to the use of hot water or a combination of solvents and blowing air, tests have been carried out succesfully to take advantage and to determine whether, by applying pressurized air only, it was possible to completely remove mixture and ensure an adequate cleaning of the mixing chamber and impeller, eliminating totally in this way the use of solvents.

Therefore, the main object of the present invention is to provide a mixing apparatus for reactant plastic materials comprising a low-pressure mixing head provided with a cleaning device which make use of a non polluting system in substitution of solvents, to remove the residue of mixture from the mixing chamber and the impeller.

Furthermore, whenever the mixing apparatus is employed intermittently for the charging of individual moulds with foamable mixtures, it is desiderable to have a self-cleaning mixing head following each on or charging cycle, as otherwise the reactive components remaining in the mixing chamber during an on-off cycle, will tend to clog the nozzle or outlet of the chamber rendering the mixing head inoperative unless it is suitably flushed.

Therefore a further object of the present invention is to provide a mixing apparatus as referred to above, provided with a self cleaning mixing head in which a strong cleaning action is performed quickly and in a controlled manner to prevent foaming and setting of the mixture after mixing so allowing the correct supply of the components at the beginning of each charging.

These and further characteristic features of the invention can be achieved with a mixing apparatus comprising a self-cleaning mixing head provided with a cleaning device according to the main claim.

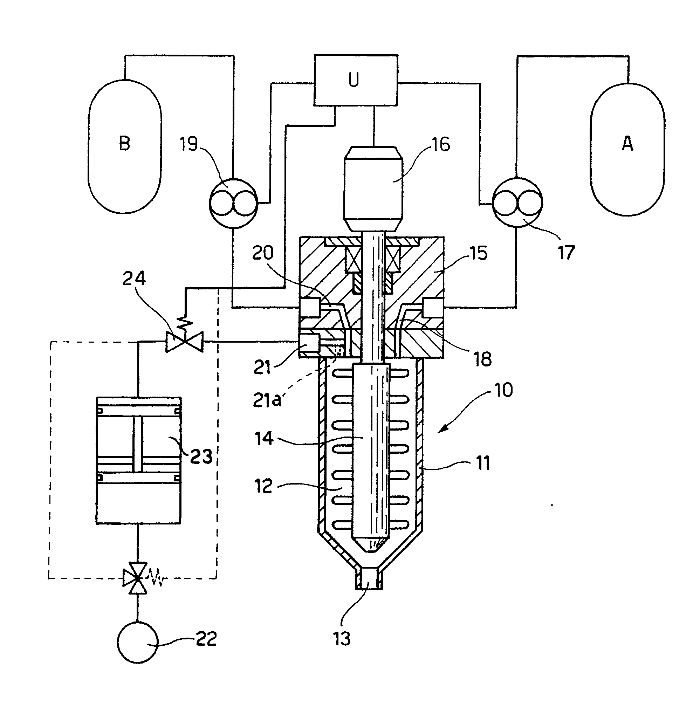

An embodiment of the invention is illustrated hereinbelow with reference to the attached drawing.

Said figure shows a mixing apparatus comprising a generic type of low-pressure mixing head 10, having a housing 11 which defines a mixing chamber 12 provided at one end thereof with an outlet opening or nozzle 13 for discharging the mixture.

Inside the chamber 12 there is a mixing rotor or impeller 14 rotatably supported by a body 15 for cleaning the chamber 12, which rotor 14 is made to rotate by an electric drive motor 16. The rotor 14 and said mixing chamber 12 may have a design different from that shown.

A first reactive component A contained in a respective reservoir is supplied to one end of the mixing chamber 12 by means of a metering pump 17 and a feeding duct 18 which opens into the mixing chamber 12, opposite to the nozzle 13.

A second component B contained in a separate reservoir is supplied to the mixing chamber by a second metering pump 19 and feeding duct 20 which opens in the mixing chamber 12 at the same manner of the duct 18.

The mixing head 10 comprises moreover a boostenning or compressed-air cleaning device described hereinbelow.

The compressed-air cleaning device comprises a boostenning means 23 connected by a supply duct 21 to the inside of the mixing chamber 12, for example via the end portion of at least one of the feeding ducts 18 and 20 for supplying the chemical components, or directly as indicated by 21a; in both cases, super pressurized air is supplied into the mixing chamber 12 such that it creates a strong swirling flow which strikes both the internal walls of the chamber 12 and the mixing rotor 14, removing the oily layer of mixture still adhering and thus effecting thorough cleaning of the mixing head 10.

In this connection, the air supply duct 21 is connected to an external source 22 of pressurized air via a control valve 24 and a pressure boostening device 23, capable of storing and providing compressed air at a high pressure, i.e. higher than that of the external supply network 22. The solenoid valve 24 of the feeding duct 21 for supplying super-pressure cleaning air is suitably actuated by a control unit U which controls also the drive motor 16 and metering pumps 17, 19 during all the operative cycles of the mixing head 10.

The working mode of the mixing device and its compressed-air cleaning device is as follows: the components A and B to be mixed are supplied in metered amounts inside the mixing chamber 12 in which the mixing rotor 14 is made to rotate.

During feeding and mixing of the components A and B into the head 10, valve 24 is closed and compressed air from source 22 is supplied into thefore chamber of the boostening device 23; than the device 23 is actuated to increase the pressure of the air to a greater pressure value, for example double that of the network 22 and preferably between 10 and 20 atmospheres, or to a higher pressure. At the same time, the solenoid valve 24 prevent compressed air from leaving the booster 23.

Once the mixing cycle, or a certain number of mixing cycles have been completed and after discharging of the mixture from the chamber 12, the control unit U allows the valve 24 to be instantly opened causing a high-pressure air flow to escape from the booster 23, into the mixing chamber 12, generating a strong swirling action against the internal walls of the chamber and on the mixing rotor 14, which dispels and completely removes the mixture still in an oily condition and still adhering to the rotor and mixing chamber surfaces. The mixture removed by the air flow is blowed outside the chamber through the outlet opening 13. The valve 24 is then closed, the pressure boostening device 23 is recharged and a second or further sets of mixing cycles may thus be performed.

Supplying of a super pressurized-air stream into the mixing chamber may be effected with the rotor 14 at a standstill; however, the rotor 14 is preferably kept rotating since this further facilitates cleaning in that the oily film of mixture also tends to be removed by the centrifugal force created by rotation of the rotor 14 inside the completely empty chamber.

From the above description it can be seen that a mixing apparatus comprising a low-pressure mixing head equipped with a compressed-air cleaning device has been provided, as a result of which the use of highly contaminating and dangerous solvents can be eliminated entirely and at the same time considerably reducing the time for the cleaning operations, with consequent advantages for the operating cycles of a moulding machine, with which said mixing apparatus is normally associated.

## Claims

1. Mixing apparatus for reactive plastic materials comprising: a mixing chamber (12) having an outlet aperture (13) at one end and a mixing impeller (14) in said chamber (12) connected to a drive motor (16), conduit means (18, 20) being provided to feed at least a first and a second chemical component (A, B) of said reactive plastic materials to said mixing apparatus, and a cleaning device for feeding a cleaning fluid into said chamber (12), characterized in that said cleaining device comprises a pressurized air source (22), an air inlet means (21) for feeding a pressurized flow of air in said mixing chamber (12), and a pressure air boostening device (23), said air boostening device (23) being operationally connected between said air source (22) and said air inlet (21) of the mixing chamber (12).

2. Mixing apparatus according to Claim 1, characterized in that the said air inlet (21) opens in a region of mixing chamber (12) close to said conduit means (18, 20) for the chemical components.

3. Mixing apparatus according to Claim 2, characterized in that said air inlet (21) opens near to the end of at least one of said conduit beans (18, 20) for the chemical components.

4. Mixing apparatus according to Claim 3, characterized in that the said air inlet (21) opens directly inside the mixing chamber (12).

5. Mixing apparatus for reactive plastic materials comprising a low-pressure mixing head (10) having a mixing chamber (12) and an impeller (14) connected to a drive motor (16), first and second metering pumps (17, 19) for feeding metered quantities of a first (A) and second (B) chemical components of said plastic materials in the mixing chamber (12), and a cleaning device 21, 22, 23) according to claim 1, characterized in that said boostening device (23) is connected to said air source (22) and said air inlet aperture (21) by a control valve means (24), said valve means (24), said drive motor (16) and said metering pumps (17, 19) being operationally connected to a control unit (U).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 958 516 (WALL)<br>* Column 8, lines 1-34; figures 1,4 *<br>– – – | 1-5 | B 29 B 7/40<br>B 01 F 15/00 |
| A | US-A-3 081 487 (HAFFNER)<br>* Column 4, lines 18-28; fig. *<br>– – – | 1 | |
| A | FR-A-1 432 145 (LÖDIGE)<br>– – – – – | | |

| | |
|---|---|
| | TECHNICAL FIELDS SEARCHED (Int. Cl.5) |
| | B 01 F<br>B 29 B |

The present search report has been drawn up for all claims

| Place of search | Date of completion of search | Examiner |
|---|---|---|
| The Hague | 07 June 91 | PEETERS S. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document